# EUROPEAN PATENT SPECIFICATION

(11) **EP 3 593 050 B1**
(45) Date of publication and mention of the grant of the patent: **28.04.2021**
(21) Application number: 18711170.3
(22) Date of filing: 28.02.2018
(51) Int. Cl.: F24C 7/08, F24C 15/20, H04N 7/18

(54) **COOKER HOOD AND VIDEO SURVEILLANCE METHOD BASED ON COOKER HOOD**
KÜCHENABZUGSHAUBE UND VERFAHREN ZUR VIDEOÜBERWACHUNG BASIEREND AUF DER KÜCHENABZUGSHAUBE
HOTTE D'EXTRACTION ET PROCÉDÉ DE SURVEILLANCE VIDÉO BASÉ SUR CETTE HOTTE D'EXTRACTION

(30) Priority: 08.03.2017 CN 201710133170
(43) Date of publication of application: 15.01.2020
(73) Proprietor: BSH Hausgeräte GmbH, 81739 München (DE)
(72) Inventor: CHU, Dongyu, Zaozhuang city Shandong Province 277315 (CN); HE, Hongcai, Nanjing 210046 (CN); SCHLOTMANN, Peter, 49219 Glandorf (DE); YANG, Lei, Nanjing 210000 (CN); SHEN, Kuang, Jiangsu Province 210005 Nanjing (CN); XU, Kai2, Nanjing Jiangsu Province 210005 (CN)
(86) International application number: PCT/IB2018/051262
(87) International publication number: WO 2018/163023

(56) References cited:
- WO-A1-2005/052453
- WO-A1-2015/078642
- WO-A1-2017/005531
- DE-A1-102015 200 735

## Description

### BACKGROUND

### Technical Field

The present invention relates to the smart home field, and more specifically, to a cooker hood and a video surveillance method based on a cooker hood.

### Related Art

A user basically moves in a kitchen, especially, around a cooker hood during daily cooking. When a family has an old person, a child, or the like that requires special monitoring, a user in a kitchen cannot monitor the old person or child in time and even cannot handle some potential dangers in time (for example, the old person suddenly falls, or the child has a foreign object lodged in the throat).

WO 2005 052 453 A1 discloses a multifunctional aspirating hood for household use. The aspirating hood provides kitchen operators with a multiplicity of services thanks to the multimedia apparatus. The apparatus can automatically control the general functions of the hood and watch the doors and windows of the home.

WO 2015 078 642 A1 discloses an exhaust hood comprising a body that is positioned above the cooker such that there is a distance between the cooker and the body, a projector that is disposed on the body and that can project onto the cooker and/or the countertop, a sensor that is disposed on the body and that can detect the movement in the area scanned, a virtual keyboard that is projected by the projector and a control unit that is disposed on the body and that performs operations by means of the virtual keyboard.

US2010182136 A1 deals with the control of appliances in the home, and with their networking and connectivity also with audio systems and internet sources and the integration of these elements in a connected manner, wherein a preferred apparatus employs a video projection system and one or more TV cameras.

Currently, in most cases, a user must frequently enter and leave a kitchen to cook food and monitor a family member. The user experience is poor, and an intelligent control technology of a home appliance (for example, a cooker hood) cannot be fully utilized.

### SUMMARY

The technical problem to be resolved in the embodiments of the present invention is how to further facilitate the intelligent control on a home appliance, and especially, how to better implement intelligent control on a home surveillance device.

To resolve the foregoing technical problem, the present invention provides a cooker hood, including a cooker hood body with the features of claim 1.

The image display component includes: a projection component, configured to present the surveillance picture to the user by means of projection.

The projection component is further configured to present an operation interface of the at least one surveillance device to the user by means of projection.

The projection component includes: an input perception component, configured to obtain an operation of the user for the operation interface to determine a user instruction.

Optionally, the control component determines the at least one surveillance device in a surveillance device set according to the user instruction.

The control component further is configured to send, in response to the user instruction, a control instruction to the at least one surveillance device by using the communications component, so as to adjust a shooting angle of the at least one surveillance device.

Optionally, the communications component and the surveillance device are located in a same local area network, and perform data exchange based on the local area network, or the communications component and the surveillance device are connected to a same cloud server, and perform data exchange by using the cloud server.

An embodiment of the present invention further provides a video surveillance method based on a cooker hood according to claim 4. The video surveillance method includes: obtaining, by the cooker hood, a surveillance picture taken by at least one surveillance device; and presenting the surveillance picture to a user by using the cooker hood.

The presenting the surveillance picture to a user by using the cooker hood includes: presenting, by the cooker hood, the surveillance picture to the user by means of projection.

The video surveillance method further includes: presenting, by the cooker hood, an operation interface of the at least one surveillance device to the user by means of projection.

The video surveillance method further includes: obtaining, by the cooker hood, an operation of the user for the operation interface to determine a user instruction.

Optionally, the video surveillance method further includes: determining the at least one surveillance device in a surveillance device set according to the user instruction.

The video surveillance method further includes: sending a control instruction to the at least one surveillance device according to the user instruction, so as to adjust a shooting angle of the at least one surveillance device.

Optionally, the surveillance device and the cooker hood are located in a same local area network, and perform data exchange based on the local area network, or the surveillance device and the cooker hood are connected to a same cloud server, and perform data exchange by using the cloud server.

Compared with the prior art, the technical solution in the present invention has the following advantages:
A communications component, a control component, and an image display component are added to a cooker hood, so that the cooker hood can communicate with at least one surveillance device by using the communications component, and obtain, based on the control component, a surveillance picture taken by the surveillance device, so as to present the surveillance picture to a user by using the image display component. Compared with the prior art, by means of the technical solutions in the embodiments of the present invention, a user is allowed to browse, based on the cooker hood, a surveillance picture taken by a surveillance device, especially a surveillance device mounted in a room other than a kitchen. By means of the technical solutions in the embodiments of the present invention, the user can keep monitoring other rooms during cooking, thereby greatly optimizing user experience and further extending intelligent control applications of home appliances.

Further, the image display component includes a projection component, so as to present the surveillance picture to the user by means of projection. A person skilled in the art understands that according to the technical solutions in the embodiments of the present invention, a physical display screen does not need to be added to the cooker hood, so that the complexity of a production process is reduced, a more appropriate layout in the overall structure of the cooker hood is facilitated, and hardware costs are saved.

Further, the projection component is further configured to present an operation interface of the at least one surveillance device to the user by means of projection, so that at the same time when browsing the surveillance picture, the user can further control the running status of the at least one surveillance device, thereby greatly extending intelligent control functions of the cooker hood on the surveillance device.

Further, the projection component may further receive a user instruction, for example, obtain, by using an input perception component, an operation of the user for the operation interface to determine a user instruction. A person skilled in the art understands that by means of the technical solutions in the embodiments of the present invention, an operation of the user for the operation interface is precisely determined based on the input perception component, so that it becomes convenient to make a timely response to an operation requirement of the user.

Further, the cooker hood may determine the at least one surveillance device in the surveillance device set according to the user instruction, so as to present, to the user by means of projection, the surveillance picture taken by the at least one surveillance device. A person skilled in the art understands that by means of the technical solutions in the embodiments of the present invention, the user not only can passively browse a surveillance picture presented by the cooker hood, but also can actively to send an instruction to the cooker hood, so as to browse, according to the will of the user, a surveillance picture taken by a specific surveillance device.

Further, the cooker hood further adjusts, in response to the user instruction, a shooting angle of the at least one surveillance device by using the control component, making it convenient for the user to monitor all corners of a room more thoroughly, thereby satisfying a requirement of 360-degree surveillance of the user.

Further, the communications component and the surveillance device are interconnected through a network connection to perform communication. A person skilled in the art should understand that in the technical solutions in the embodiments of the present invention, the cooker hood is connected to a network connection by using the communications component, so as to implement interconnection between the cooker hood and the surveillance device (for example, an access control camera mounted at a gate), thereby providing a communication basis for the control of the surveillance device based on the cooker hood in the embodiments of the present invention.

Further, the communications component and the surveillance device may be located in a same local area network, and perform data exchange based on the local area network, or the communications component and the surveillance device may further be connected to a same cloud server, and perform data exchange by using the cloud server. A person skilled in the art should understand that in the technical solutions in the embodiments of the present invention, the cooker hood and the surveillance device are connected by using a local area network or a cloud, and instructions are transmitted to interconnected parties, so as to implement the interconnection and interworking between the cooker hood and the surveillance device, so that the user can obtain, by using the cooker hood, a surveillance picture taken by the surveillance device, and perform intelligent remote control on the surveillance device.

### BRIEF DESCRIPTION OF THE DRAWINGS

FIG. 1 is a schematic principle diagram of a cooker hood according to a first embodiment of the present invention;
FIG. 2 is a logic block diagram of the cooker hood according to the first embodiment of the present invention;
FIG. 3 is a schematic diagram of an application scenario of the cooker hood according to the first embodiment of the present invention;
FIG. 4 is a schematic diagram of another application scenario of the cooker hood according to the first embodiment of the present invention;
FIG. 5 is a flowchart of a video surveillance method based on a cooker hood according to a second embodiment of the present invention;
FIG. 6 is a flowchart of a video surveillance method based on a cooker hood according to a third embodiment of the present invention; and
FIG. 7 is a flowchart of a video surveillance method based on a cooker hood according to a fourth embodiment of the present invention.

### DETAILED DESCRIPTION

As described in the background, an existing cooker hood cannot be interconnected with a home appliance (for example, a home surveillance camera) in a house. As a result, a user in a kitchen cannot obtain real-time images in other rooms in time. When a family has an old person and/or a child that requires special care, if the user in the kitchen wants to monitor the old person and/or child of the family in another room conveniently and rapidly in real time, such a requirement of the user cannot be satisfied in the prior art.

To resolve this technical problem, in embodiments of the technical solution in the present invention, a communications component, a control component, and an image display component are added to a cooker hood, so that the cooker hood can communicate with at least one surveillance device by using the communications component, and obtain, based on the control component, a surveillance picture taken by the surveillance device, so as to present the surveillance picture to a user by using the image display component.

A person skilled in the art understands that by means of the technical solutions in the embodiments of the present invention, a user is allowed to browse, based on a cooker hood, a surveillance picture taken by a surveillance device, especially a surveillance device mounted at a room other than the kitchen. By means of the technical solutions in the embodiments of the present invention, the user can keep monitoring other rooms during cooking, thereby greatly optimizing user experience and further extending intelligent control applications of home appliances.

To make the foregoing objectives, features, and advantages of the present invention more comprehensible, specific embodiments of the present invention are described below in detail with reference to the accompanying drawings.

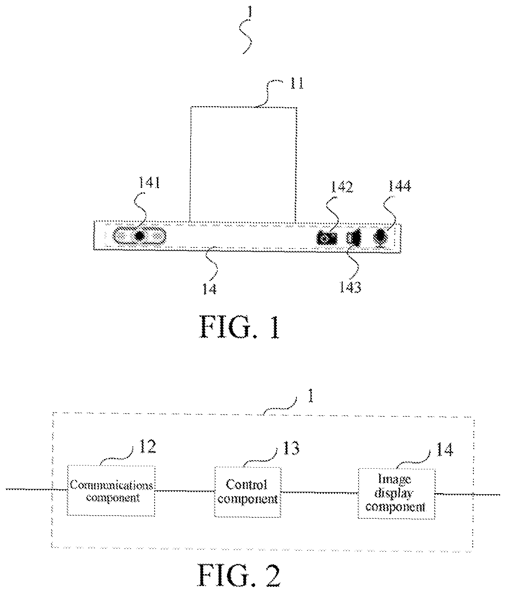

FIG. 1 is a schematic principle diagram of a cooker hood according to a first embodiment of the present invention. Specifically, in this embodiment, the cooker hood 1 includes a cooker hood body 11. The cooker hood body 11 may be included in a cooker hood that appears in the prior art, and is not limited here. Further specifically, the cooker hood 1 further includes a communications component, a control component, and an image display component 14 that are disposed in the cooker hood body 11. In a preferred example, FIG. 2 is a logic block diagram of the cooker hood. The control component 13 obtains, by using the communications component 12, a surveillance picture taken by at least one surveillance device; and presents the surveillance picture to a user based on the image display component 14. A person skilled in the art understands that FIG. 1 may show the cooker hood in this embodiment of the present invention from the macroscopic perspective and FIG. 2 additionally describes the functional running logic of the components included in the cooker hood from the perspective of internal circuit principles.

Preferably, the at least one surveillance device each can communicate with the communications component 12. For example, a surveillance device with a network access function (for example, a WiFi surveillance camera) can directly communicate with the communications component 12. Alternatively, a surveillance device without a network access function (for example, a digital camera) can further communicate with the communications component 12 in a manner of coupling to an external communications component. Preferably, the surveillance device with a network access function may be a home appliance equipped with a wireless communications module and having an image collection function, for example, a laptop computer with a camera, a smart TV with a camera, or a network camera.

Further, the communications component 12 and the surveillance device are interconnected through a network connection to perform communication. A person skilled in the art understands that in the technical solution in this embodiment of the present invention, the cooker hood 1 is connected to a network connection by using the communications component 12, so as to implement interconnection between the cooker hood 1 and the surveillance device (for example, a network surveillance camera mounted in a room other than a kitchen), thereby providing a communication basis for presentation and control of the surveillance device based on the cooker hood 1 in this embodiment of the present invention.

In a preferred example, the communications component 12 and the surveillance device may be located in a same local area network, and perform data exchange based on the local area network. The local area network may be established by the cooker hood 1. For example, the communications component 12 includes a WiFi communications module. The cooker hood may establish the local area network based on the WiFi communications module.

In a variant example, the local area network may alternatively be established by the surveillance device. For example, the surveillance device is a WiFi surveillance camera equipped with a WiFi generation module. In this case, a user may control the WiFi generation module of a television in advance to establish a local area network. After the cooker hood 1 is connected to the local area network by using the communications component 12, the cooker hood 1 and the television may be located in a same local area network to perform data exchange.

In another variant example, the local area network may further be established by a third party different from the cooker hood 1 and the surveillance device. For example, a user mounts a wireless router at home in advance, and controls the wireless router to establish a wireless local area network. After joining the wireless local area network, the cooker hood 1 and the surveillance device may use the wireless local area network as a platform to perform data exchange.

In a variant example of this embodiment, the communications component 12 and the surveillance device may further be connected to a same cloud server (not shown) and perform data exchange by using the cloud server. For example, a dedicated cloud server for the technical solution in this embodiment of the present invention is arranged in advance. The cooker hood 1 is connected to the cloud server by using the communications component 12, so as to perform data exchange with the surveillance device that is also connected to the cloud server. A person skilled in the art understands that in the technical solution in this embodiment of the present invention, the cooker hood 1 and the surveillance device are connected by using a local area network or a cloud, and instructions are transmitted to interconnected parties by using the cloud server as a relay station, so as to implement the interconnection and interworking between the cooker hood 1 and the surveillance device, so that the user can perform intelligent remote control on the surveillance device by using the cooker hood 1.

In a variant example, the cloud server may also be an existing cloud server in the prior art. When performing the technical solution in this embodiment of the present invention, the cooker hood 1 performs, by using the cloud server, data exchange with the surveillance device that is also connected to the cloud server, which is not limited here.

Further, the image display component 14 may present the surveillance picture to the user by using a display panel (for example, an electronic display screen). For example, for an existing cooker hood with a display screen, the surveillance picture may be presented based on the display screen of the cooker hood.

In a variant example, the cooker hood 1 may alternatively present the surveillance picture to the user by means of virtual displaying. For example, the image display component 14 may include a projection component 141, configured to present the surveillance picture to the user by means of projection. The projected picture may be projected on any suitable projection surface, for example, a cooking top or a wall in a kitchen. The projection component 141 may be a projector.

Further, the projection component 141 may further present an operation interface of the at least one surveillance device to the user by means of projection. The operation interface may include respective basic information (for example, a name or a mounting position of the surveillance device) of the at least one surveillance device. In a preferred example, the projector generates the operation interface in the form of a menu list, so as to project the basic information of the at least one surveillance device on a wall for the user to browse.

Further, the projection component 141 may further include an input perception component 142, configured to obtain an operation of the user for the operation interface to determine a user instruction. A person skilled in the art understands that the input perception component 142 may obtain a limb movement and/or facial expression of the user to determine a user instruction, so as to remotely control the surveillance device according to the user instruction. For example, the input perception component 142 may be a camera. In a preferred example, when the user browses a menu list projected by the projection component 141, the camera captures the limb movement (for example, a gesture) and the facial expression (for example, an eyeball movement) of the user in real time, so as to accurately determine a corresponding user instruction according to a user behavior taken by the camera, thereby precisely recognizing a user intention.

Further, the input perception component 142 may further be a virtual reality (VR) device.

A person skilled in the art understands that in the technical solution in this embodiment of the present invention, the projection component 141 is used to present the operation interface to the user. A physical display screen does not need to be added to the cooker hood 1, so that the complexity of a production process is reduced, a more appropriate layout in the overall structure of the cooker hood 1 is facilitated, and hardware costs are saved. Correspondingly, an operation of the user for the operation interface is precisely determined based on the input perception component 142, so that it becomes convenient to make a timely response to an operation requirement of the user.

In a variant example of this embodiment, the cooker hood 1 may further include an audio sensing device 144, configured to collect a voice input of the user to determine the user instruction. For example, the user speaks to send a vocal instruction to the cooker hood 1 after browsing the operation interface and the surveillance picture that are presented by means of projection by the projection component 141. The cooker hood 1 collects the voice input of the user in real time by using the audio sensing device 144, and determines the user instruction by analyzing the content of voice data. A person skilled in the art understands that the technical solution in this embodiment of the present invention provides multiple manners of receiving a user instruction to satisfy varied requirements of different users, so as to better reflect the technical concept of an intelligent cooker hood. For example, the audio sensing device 144 may retrieve a keyword in the collected voice input of the user, and determine the user instruction by means of keyword matching. In another example, the audio sensing device 144 may further record voiceprint data of the user in advance, and match the collected voice input against the voiceprint data when the technical solution in this embodiment of the present invention is performed, so as to avoid an incorrect response or an incorrect operation.

Further, after determining the user instruction, the control component 13 may determine the at least one surveillance device in a surveillance device set according to the user instruction. Preferably, the surveillance device set may be determined by the user in advance. For example, the user may add surveillance cameras or home appliances having an image collection function in different rooms at home to the surveillance device set, so as to control these surveillance devices intelligently and remotely by means of the technical solution in this embodiment of the present invention. Alternatively, some of the surveillance cameras or home appliances having an image collection function may be chosen and added to the surveillance device set.

In a preferred example, the user may add network surveillance cameras that are located in a bedroom and a nursery and located at the door to the surveillance device set. The user in a kitchen may obtain, by using the cooker hood 1, a surveillance picture taken by the network surveillance camera in the nursery, so as to monitor a child in the nursery in real time, so as to protect a child from a physical injury accident due to the negligence of a parent.

Further, the control component 13 is configured to send, in response to the user instruction, a control instruction to the at least one surveillance device by using the communications component 12, so as to adjust a shooting angle of the at least one surveillance device. The example in which a user instruction is used to obtain a surveillance picture in a nursery is still used. When a child in a room leaves the coverage of the network surveillance camera, the user may use the cooker hood 1 to control the network surveillance camera to adjust a shooting angle, so as to keep tracking and monitoring the child.

Further, the communications component 12 and the control component 13 may be disposed inside the cooker hood body 11, for example, integrated in a control circuit of the cooker hood 1 in a chip form. Alternatively, the communications component 12 and the control component 13 may be respectively integrated on different chips or integrated in a same chip. The image display component 14 may be mounted on the cooker hood body 11 in advance, so as to present a surveillance picture to the user.

In a variant example, the communications component 12, the control component 13, and the image display component 14 may further be externally connected to the cooker hood body 11 from outside respectively, and communicate with the control component 13 of the cooker hood 1 in a wired or wireless form. For example, the communications component 12, the control component 13, and the image display component 14 are mounted on the cooker hood body 11 in the form of a set-top box, so that the technical solution in this embodiment of the present invention is widely applicable to any cooker hood in the prior art.

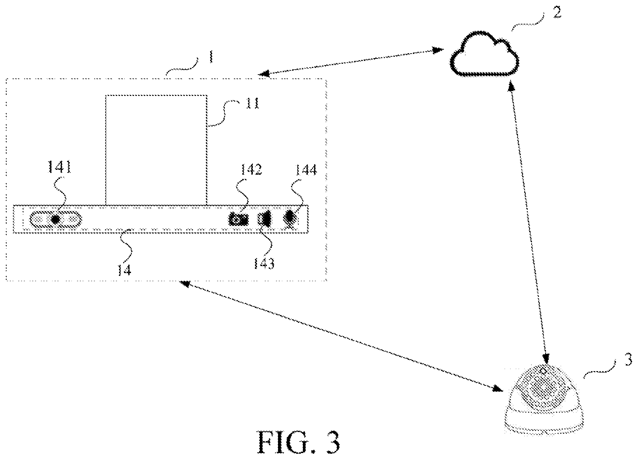

FIG. 3 is a schematic diagram of an application scenario of the cooker hood according to the first embodiment of the present invention.

In a typical application scenario, the cooker hood 1 communicates with a surveillance device (for example, an access control surveillance camera, a computer on which a camera is mounted, or a network surveillance camera) in the surveillance device set by using the communications component 12, and presents basic information (for example, a name or a mounting position of the surveillance device) of the at least one surveillance device to the user by means of projection by using the projection component 141. The projection component 141 may present an operation interface on a wall of a kitchen by means of projection. The basic information of the at least one surveillance device is presented on the operation interface. The communications component 12 communicates with the surveillance device by using a cloud server 2.

When the user browses the operation interface, the cooker hood 1 obtains an operation of the user for the operation interface by using the input perception component 142, to determine a user instruction (for example, a gesture of the user is a horizontal or vertical swipe on the operation interface, or a finger of the user stays in a local position of the operation interface).

In this application scenario, the user instruction determined by the input perception component 142 may be that the finger of the user stays in a local position of the operation interface. The input perception component 142 sends the determined user instruction to the control component 13. The control component 13 performs matching in a preset database to recognize that the user instruction corresponds to a user intention that the user clicks a surveillance device, to obtain status information of the surveillance device. In another example, the user instruction of the horizontal swipe of the user on the operation interface may correspond to a user intention of page turning.

For example, when hearing a doorbell ringing, a user in a kitchen may directly send an instruction to the cooker hood 1. The cooker hood 1 recognizes that a user intention corresponding to the user instruction is that the user wants to obtain a surveillance picture taken by an access control surveillance camera 3, then controls the control component 13 to obtain, by using the communications component 12, a surveillance picture taken in real time by the access control surveillance camera 3, and presents the surveillance picture on a wall by means projection by using the projection component 141 (for example, completely or partially replaces the operation interface with the surveillance picture) for the user to browse.

Further, if the user wants to change a shooting angle of the access control surveillance camera 3 when browsing the surveillance picture, the user may directly perform a gesture operation on the surveillance picture. The input perception component 142 determines the user instruction by using the operation of the user for the surveillance picture, and transfers the determined user instruction to the control component 13. After recognizing the user instruction, the control component 13 correspondingly adjusts the shooting angle of the access control surveillance camera 3 according to the user instruction by using the communications component 12. For example, the upward movement of the finger of the user corresponds to upward adjustment of the shooting angle, and the leftward movement of the finger of the user corresponds to leftward adjustment of the shooting angle. A person skilled in the art may make changes according to actual requirements to obtain more embodiments, which are not described here.

Further, when adjusting the shooting angle of the access control surveillance camera 3 to fully view the surveillance picture and then deciding to allow a current visitor to enter through door, the user may continue to send a user instruction to the cooker hood 1 to control, by using the cooker hood 1, an access control system linked to the cooker hood 1 to open the door, so that the visitor can enter the door successfully.

Further, the cooker hood 1 and a surveillance device in the surveillance device set are located in a same local area network by using the communications component 12, or are connected to the same cloud server 2, to perform data exchange.

In a variant example, the cooker hood 1 may further include an audio sensing device 144. The cooker hood 1 may collect a voice input of the user by using the audio sensing device 144, so as to receive a user instruction in a more accurate and timely manner.

Further, in this application scenario, the cooker hood 1 may further prompt working status change information of at least one surveillance device in the surveillance device set to the user by using a prompt component 143, so that the user acquires the working status of the surveillance devices in time.

Further, the cooker hood 1 may further control the projection component 141 to automatically present, by means of projection, the surveillance picture taken by the surveillance device to the user, so that the user can conveniently and rapidly view real-time images in other rooms by using the operation interface.

A person skilled in the art understands that the positions of the communications component 12, the control component 13, and the image display component 14 should not be limited to the placement positions in the examples in FIG. 1 and FIG. 2. The arrangement sequence of the projection component 141, the input perception component 142, and the audio sensing device 144 included in the image display component 14 may be changed according to actual requirement to obtain more embodiments, which are not described here.

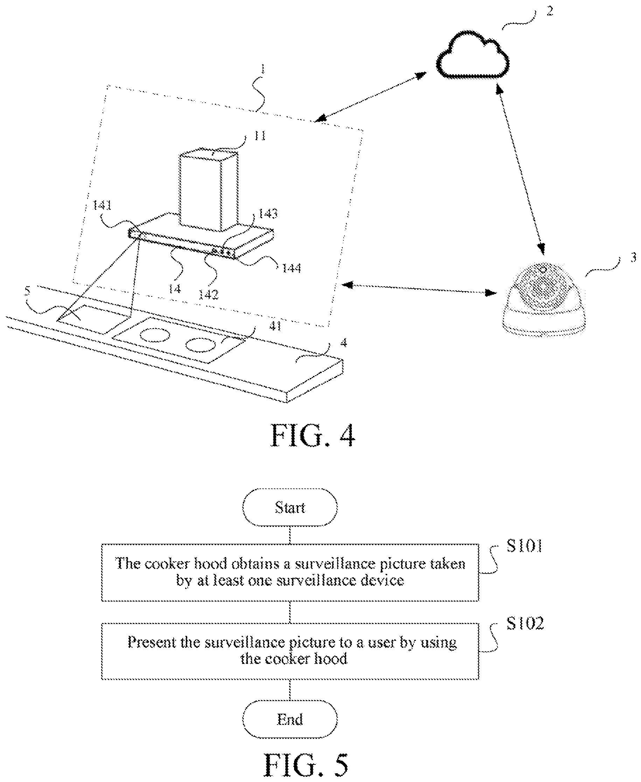

FIG. 4 is a schematic diagram of another application scenario of the cooker hood according to the first embodiment of the present invention. Specifically, in this embodiment, the cooker hood 1 may be disposed right above a stove 41. The stove 41 may be disposed on a cooking top 4.

Further, a difference from the foregoing application scenario shown in FIG. 3 lies in that in this application scenario, the projection component 141 may present an operation interface 5 by means of projection in an idle position (for example, next to the stove 41) of the cooking top 4. Basic information of the at least one surveillance device (for example, the access control surveillance camera 3) is presented on the operation interface 5. A person skilled in the art understands that the presentation position of the operation interface 5 may be adjusted according to the arrangement characteristics of the projection component 141 and the cooker hood 1 and the overall layout of a kitchen. For example, the operation interface 5 may be presented on a wall or on the stove 41 as in the application scenarios shown in FIG. 3 and FIG. 4, or may further be presented on the outer surface of another object (for example, a refrigerator) in the kitchen. A person skilled in the art may make changes according to actual requirements to obtain more embodiments, which are not described here.

Further, the input perception component 142 obtains, by using a shooting manner or the like, a gesture of the user on the operation interface 5, to determine a user instruction. For example, the shooting angle of the access control surveillance camera 3 is controlled according to a gesture operation of the user on the operation interface 5 to move rightward.

FIG. 5 is a flowchart of a video surveillance method based on a cooker hood according to a second embodiment of the present invention. The cooker hood may be the cooker hood 1 in the foregoing embodiment shown in FIG. 1 to FIG. 4.

Specifically, in this embodiment, Step S101 of obtaining, by the cooker hood, a surveillance picture taken by at least one surveillance device is first performed. Step S102 of presenting the surveillance picture to a user by using the cooker hood is then performed.

In a preferred example, the cooker hood and the at least one surveillance device are located in a same local area network, and perform data exchange based on the local area network, so as to obtain the surveillance picture from the at least one surveillance device.

Further, the control component 13 in the foregoing embodiment shown in FIG. 1 to FIG. 4 may perform Step S101, and the image display component 14 in the foregoing embodiment shown in FIG. 1 to FIG. 4 may perform Step S102. A person skilled in the art may refer to the technical solution in the foregoing embodiment shown in FIG. 1 to FIG. 4 for related working principles, which are not described here.

In a variant example, the surveillance device and the cooker hood may further be connected to a same cloud server, and perform data exchange by using the cloud server.

Further, Step S102 may include: presenting, by the cooker hood, the surveillance picture to the user by means of projection. For example, the projection component 141 in the foregoing embodiment shown in FIG. 1 to FIG. 4 may present the surveillance picture to the user by means of projection.

Further, the cooker hood may further present an operation interface of the at least one surveillance device to the user by means of projection. For example, the cooker hood may present, by means of projection by using the projection component 141 in the foregoing embodiment shown in FIG. 1 to FIG. 4, the surveillance picture taken by the at least one surveillance device to the user, and at the same time present, to the user in the manner of a menu list, buttons (for example, an on/off button, and a shooting angle adjustment button) of control operations that can be performed on the surveillance device, so that the user may further control the surveillance device according to the requirement of the user.

Further, after presenting an operation interface of the at least one surveillance device to the user by means of projection, the cooker hood may obtain an operation of the user for the operation interface to determine a user instruction. For example, the cooker hood may determine the user instruction by using the input perception component 142 in the foregoing embodiment shown in FIG. 1 to FIG. 4.

Further, the cooker hood may determine the at least one surveillance device in a surveillance device set according to the user instruction. The surveillance device set may be set by the user in advance. For example, the surveillance device set may include an intelligent television equipped with camera, a network surveillance camera, or the like in a bedroom.

Further, the cooker hood may further send a control instruction to the at least one surveillance device according to the user instruction, so as to adjust a shooting angle of the at least one surveillance device. In a preferred example, the control component 13 in the foregoing embodiment shown in FIG. 1 to FIG. 4 may be used to recognize the user instruction and adjust the shooting angle according to the indication of the user instruction.

In a variant example, Step S101 may further include: collecting the voice input of the user, to determine the user instruction. For example, the audio sensing device 144 in the foregoing embodiment shown in FIG. 1 to FIG. 4 may be used to determine the user instruction.

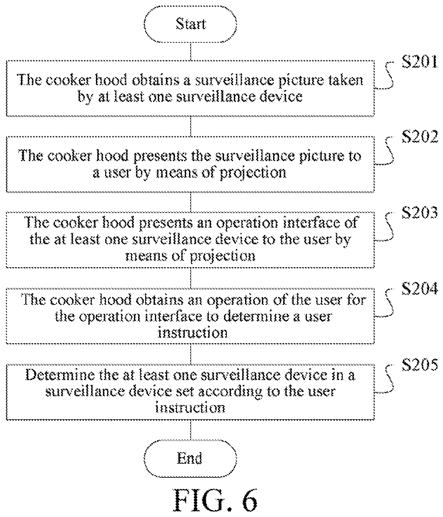

FIG. 6 is a flowchart of a video surveillance method based on a cooker hood according to a third embodiment of the present invention. The cooker hood may be the cooker hood 1 in the foregoing embodiment shown in FIG. 1 to FIG. 4.

Specifically, in this embodiment, Step S201 of obtaining, by the cooker hood by using the communications component 12, a surveillance picture taken by at least one surveillance device (for example, surveillance pictures respective taken by five surveillance cameras) is performed first.

Step S202 of presenting, by the cooker hood, the surveillance picture to a user by means of projection by using the projection component 141 is then performed, and Step S203 of similarly presenting an operation interface of the at least one surveillance device to the user by means of projection by using the projection component 141 is performed. The surveillance picture and the operation interface may be presented in a same area (for example, the surveillance pictures of the five surveillance cameras may be presented in parallel in a grid form in the same area, and the operation interface is presented on the left side in the same area in a drop-down list, so that the user performs further operations on the presented surveillance pictures).

When the user views the surveillance picture and the operation interface, Step S204 of performing monitoring, by the cooker hood by using the input perception component 142, to obtain an operation of the user for the operation interface to determine a user instruction (for example, the user uses a finger to click the surveillance picture that is presented by means of projection and is taken by the second surveillance camera) is performed, and Step S205 of determining the at least one surveillance device in a surveillance device set according to the user instruction by using the control component 13 (for example, determining a surveillance camera corresponding to the surveillance picture that is taken by the second surveillance camera and is clicked by the user) is performed. The surveillance picture taken by the at least one surveillance device may further be enlarged to the full screen (for example, the picture fills the entire area generated by the projection component 141 by means of projection) for the user to view.

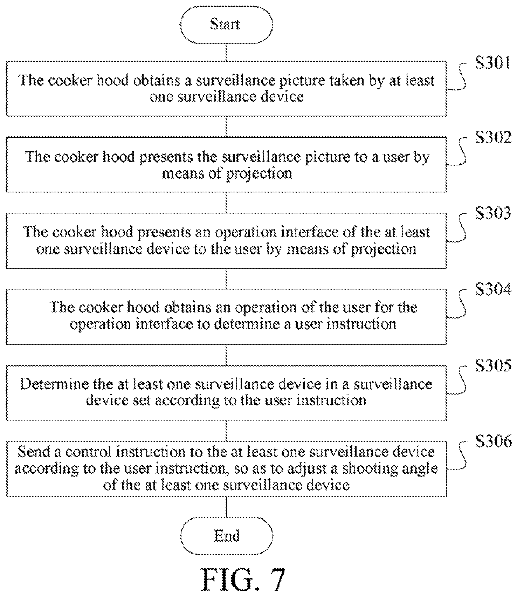

FIG. 7 is a flowchart of a video surveillance method based on a cooker hood according to a fourth embodiment of the present invention. The cooker hood may be the cooker hood 1 in the foregoing embodiment shown in FIG. 1 to FIG. 4.

Specifically, in this embodiment, reference may be made to Step S201 to Step S205 in the foregoing embodiment shown in FIG. 6 for Step S301 to Step S305, which are not described here.

A difference from the foregoing embodiment shown in FIG. 6 lies in that, in this embodiment, after Step S305 is performed, Step S306 of sending a control instruction to the at least one surveillance device according to the user instruction by using the control component 13, so as to adjust a shooting angle of the at least one surveillance device may further be performed. For example, when a user views a surveillance picture taken by the surveillance camera, if an object under surveillance presented in the surveillance picture leaves the effective collection range of the surveillance camera, the user may perform a gesture operation (for example, an upward swipe) on an operation interface presented by the projection component 141 by means of projection. The input perception component 142 obtains a gesture of the user and determine a user instruction in combination with the control component 13 (for example, an upward swipe gesture may correspond to a user instruction of moving the shooting angle upward), so as to transmit, by using signal transmission (for example, by using a cloud server or a local area network) of the communications component 12, a control instruction of moving the shooting angle upward to the surveillance camera. The surveillance camera moves the shooting angle upward according to the control instruction, and the user can continue to watch the adjustment of the surveillance camera in real time by using a surveillance picture presented by the projection component 141.

A person of ordinary skill in the art may understand that all or some of the steps of the various methods in the foregoing embodiments may be implemented by a program instructing relevant hardware. The program may be stored in a computer readable storage medium. The storage medium may be a read-only memory (ROM), a random-access memory (RAM), a magnetic disk, an optical disc, or the like.

The present invention is disclosed above, but the present invention is not limited thereto. Any person skilled in the art may make various variations and modifications without departing from the scope of the present invention. Therefore, the protection scope of the present invention should be as defined by the claims.

## Claims

1. A cooker hood (1), comprising a cooker hood body (11), and further comprising:
a communications component (12), a control component (13), and an image display component (14) that are disposed in the cooker hood body (11), wherein
the control component (13) is configured to obtain, by using the communications component (12), a surveillance picture taken by at least one surveillance device; and
the image display component (14) is configured to present the surveillance picture to a user;
**characterized in that** the cooker hood further comprises
a projection component (141), configured to present the surveillance picture to the user by means of projection and
further configured to present an operation interface of the at least one surveillance device to the user by means of projection,
wherein the projection component (141) comprises:
an input perception component (142), configured to obtain an operation of the user for the operation interface to determine a user instruction, and
wherein the control component (13) further is configured to send in response to the user instruction, a control instruction to the at least one surveillance device by using the communications component (12), so as to adjust a shooting angle of the at least one surveillance device.

2. The cooker hood (1) according to claim 1, **characterized in that**, the control component (13) determines the at least one surveillance device in a surveillance device set according to the user instruction.

3. The cooker hood (1) according to any one of claims 1 to 2, **characterized in that**, the communications component (12) and the surveillance device are located in a same local area network, and perform data exchange based on the local area network, or the communications component (12) and the surveillance device are connected to a same cloud server, and perform data exchange by using the cloud server.

4. A video surveillance method based on a cooker hood, comprising:
obtaining, by the cooker hood, a surveillance picture taken by at least one surveillance device; and
presenting the surveillance picture to a user by using the cooker hood, **characterized by**
presenting, by the cooker hood, the surveillance picture to the user by means of projection,
presenting, by the cooker hood, an operation interface of the at least one surveillance device to the user by means of projection,
obtaining, by the cooker hood, an operation of the user for the operation interface to determine a user instruction,
sending a control instruction to the at least one surveillance device according to the user instruction, so as to adjust a shooting angle of the at least one surveillance device.

5. The video surveillance method according to claim 4, **characterized by** further comprising:
determining the at least one surveillance device in a surveillance device set according to the user instruction.

6. The video surveillance method according to any one of claims 4 to 5, **characterized in that**, the surveillance device and the cooker hood are located in a same local area network, and perform data exchange based on the local area network, or the surveillance device and the cooker hood are connected to a same cloud server, and perform data exchange by using the cloud server.

## Patentansprüche

1. Dunstabzugshaube (1), die einen Dunstabzugshaubenhauptteil (11) und ferner Folgendes umfasst:
eine Kommunikationskomponente (12), eine Steuerkomponente (13) und eine Bildanzeigekomponente (14), die in dem Dunstabzugshaubenhauptteil (11) angeordnet sind, wobei
die Steuerkomponente (13) so konfiguriert ist, dass sie mithilfe der Kommunikationskomponente (12) ein Überwachungsbild empfängt, das von mindestens einer Überwachungsvorrichtung aufgenommen wird, und
die Bildanzeigekomponente (14) so konfiguriert ist, dass sie einem Benutzer das Überwachungsbild präsentiert,
**dadurch gekennzeichnet, dass** die Dunstabzugshaube ferner Folgendes umfasst:
eine Projektionskomponente (141), die so konfiguriert ist, dass sie dem Benutzer das Überwachungsbild mithilfe einer Projektion präsentiert, und ferner so konfiguriert ist, dass sie dem Benutzer mithilfe einer Projektion eine Benutzerschnittstelle für die mindestens einen Überwachungsvorrichtung präsentiert,
wobei die Projektionskomponente (141) Folgendes umfasst:
eine Eingabeerfassungskomponente (142), die so konfiguriert ist, dass sie eine Bedienung der Benutzerschnittstelle durch den Benutzer erfasst und so eine Benutzeranweisung ermittelt, und
wobei die Steuerkomponente (13) ferner so konfiguriert ist, dass sie als Reaktion auf die Benutzeranweisung mithilfe der Kommunikationskomponente (12) eine Steueranweisung zu der mindestens einen Überwachungsvorrichtung sendet, um einen Aufnahmewinkel der mindestens einen Überwachungsvorrichtung einzustellen.

2. Dunstabzugshaube (1) nach Anspruch 1, **dadurch gekennzeichnet, dass** die Steuerkomponente (13) den Benutzeranweisungen entsprechend die mindestens eine Überwachungsvorrichtung in einem Satz Überwachungsvorrichtungen ermittelt.

3. Dunstabzugshaube (1) nach einem der Ansprüche 1 bis 2, **dadurch gekennzeichnet, dass** sich die Kommunikationskomponente (12) und die Überwachungsvorrichtung im gleichen lokalen Netzwerk befinden und auf der Grundlage des lokalen Netzwerks einen Datenaustausch durchführen oder die Kommunikationskomponente (12) und die Überwachungsvorrichtung mit dem gleichen Cloud-Server verbunden sind und mithilfe des Cloud-Servers einen Datenaustausch durchführen.

4. Videoüberwachungsverfahren auf der Grundlage einer Dunstabzugshaube, das Folgendes umfasst:
Empfangen eines von mindestens einer Überwachungsvorrichtung aufgenommenen Überwachungsbilds durch die Dunstabzugshaube und
Präsentieren des Überwachungsbilds für einen Benutzer mithilfe der Dunstabzugshaube,
**gekennzeichnet durch**
Präsentieren des Überwachungsbilds für den Benutzer mithilfe einer Projektion durch die Dunstabzugshaube,
Präsentieren einer Benutzerschnittstelle für die mindestens eine Überwachungsvorrichtung für den Benutzer mithilfe einer Projektion durch die Dunstabzugshaube,
Erfassen einer Bedienung der Benutzerschnittstelle durch den Benutzer durch die Dunstabzugshaube zum Ermitteln einer Benutzeranweisung,
Senden einer Steueranweisung zu der mindestens einen Überwachungsvorrichtung entsprechend der Benutzeranweisung, um einen Aufnahmewinkel der mindestens einen Überwachungsvorrichtung einzustellen.

5. Videoüberwachungsverfahren nach Anspruch 4, **dadurch gekennzeichnet, dass** es ferner Folgendes umfasst:
Ermitteln der mindestens einen Überwachungsvorrichtung in einem Satz Überwachungsvorrichtungen entsprechend den Benutzeranweisungen.

6. Videoüberwachungsverfahren nach einem der Ansprüche 4 bis 5, **dadurch gekennzeichnet, dass** sich die Überwachungsvorrichtung und die Dunstabzugshaube im gleichen lokalen Netzwerk befinden und auf der Grundlage des lokalen Netzwerks einen Datenaustausch durchführen oder die Überwachungsvorrichtung und die Dunstabzugshaube mit dem gleichen Cloud-Server verbunden sind und mithilfe des Cloud-Servers einen Datenaustausch durchführen.

## Revendications

1. Hotte aspirante (1), comprenant un corps de hotte aspirante (11), et comprenant en outre :
un composant de communication (12), un composant de commande (13) et un composant d'affichage d'image (14) qui sont disposés dans le corps de hotte aspirante (11), dans laquelle
le composant de commande (13) est configuré pour obtenir, en utilisant le composant de communication (12), une image de surveillance prise par au moins un dispositif de surveillance ; et
le composant d'affichage d'image (14) est configuré pour présenter l'image de surveillance à un utilisateur ;
**caractérisée en ce que** la hotte aspirante comprend en outre
un composant de projection (141), configuré pour présenter l'image de surveillance à l'utilisateur au moyen d'une projection et configuré en outre pour présenter une interface d'opération de l'au moins un dispositif de surveillance à l'utilisateur au moyen d'une projection,
dans laquelle le composant de projection (141) comprend :
un composant de perception d'entrée (142), configuré pour obtenir une opération de l'utilisateur sur l'interface d'opération déterminant une instruction d'utilisateur, et
dans laquelle le composant de commande (13) est en outre configuré pour envoyer, en réponse à l'instruction d'utilisateur, une instruction de commande à l'au moins un dispositif de surveillance en utilisant le composant de communication (12), de façon à ajuster un angle de prise de vue de l'au moins un dispositif de surveillance.

2. Hotte aspirante (1) selon la revendication 1, **caractérisée en ce que**, le composant de commande (13) détermine l'au moins un dispositif de surveillance dans un ensemble de dispositifs de surveillance selon l'instruction d'utilisateur.

3. Hotte aspirante (1) selon l'une quelconque des revendications 1 à 2, **caractérisée en ce que**, le composant de communication (12) et le dispositif de surveillance sont situés dans un même réseau local et réalisent un échange de données basé sur le réseau local, ou le composant de communication (12) et le dispositif de surveillance sont connectés à un même serveur en nuage et réalisent un échange de données en utilisant le serveur en nuage.

4. Procédé de surveillance vidéo basé sur une hotte aspirante, comprenant :
l'obtention, par la hotte aspirante, d'une image de surveillance prise par au moins un dispositif de surveillance ; et
la présentation de l'image de surveillance à un utilisateur en utilisant la hotte aspirante,
**caractérisé par**
la présentation, par la hotte aspirante, de l'image de surveillance à l'utilisateur au moyen d'une projection,
la présentation, par la hotte aspirante, d'une interface d'opération de l'au moins un dispositif de surveillance à l'utilisateur au moyen d'une projection,
l'obtention, par la hotte aspirante, d'une opération de l'utilisateur sur l'interface d'opération déterminant une instruction d'utilisateur,
l'envoi d'une instruction de commande à l'au moins un dispositif de surveillance selon l'instruction d'utilisateur, de façon à ajuster un angle de prise de vue de l'au moins un dispositif de surveillance.

5. Procédé de surveillance vidéo selon la revendication 4, **caractérisé par le fait qu'**il comprend en outre :
la détermination de l'au moins un dispositif de surveillance dans un ensemble de dispositifs de surveillance selon l'instruction d'utilisateur.

6. Procédé de surveillance vidéo selon l'une quelconque des revendications 4 à 5, **caractérisé en ce que**, le dispositif de surveillance et la hotte aspirante sont situés dans un même réseau local et réalisent un échange de données basé sur le réseau local, ou le dispositif de surveillance et la hotte aspirante sont connectés à un même serveur en nuage et réalisent un échange de données en utilisant le serveur en nuage.
